# EUROPÄISCHE PATENTSCHRIFT

(11) **EP 2 342 947 B1**
(45) Veröffentlichungstag und Bekanntmachung des Hinweises auf die Patenterteilung: **08.07.2015**
(21) Anmeldenummer: 09744976.3
(22) Anmeldetag: 04.11.2009
(51) Int. Cl.: H05B 33/08

(54) **LEUCHTMITTEL-BETRIEBSGERÄT MIT POTENTIALTRENNUNG**
ILLUMINANT OPERATING APPLIANCE WITH POTENTIAL SEPARATION
APPAREIL À SÉPARATION DE POTENTIELS POUR FAIRE FONCTIONNER UN DISPOSITIF LUMINESCENT

(30) Priorität: 05.11.2008 DE 102008055862
(43) Veröffentlichungstag der Anmeldung: 13.07.2011
(73) Patentinhaber: Tridonic GmbH & Co KG, 6851 Dornbirn (AT)
(72) Erfinder: BARTH, Alexander, 6861 Alberschwende (AT)
(74) Vertreter: Rupp, Christian
(86) Internationale Anmeldenummer: PCT/EP2009/007907
(87) Internationale Veröffentlichungsnummer: WO 2010/051984

(56) Entgegenhaltungen:
- EP-A1- 1 473 976
- US-A- 5 907 223
- US-A- 5 926 115
- US-A1- 2002 140 375
- US-A1- 2005 218 838
- US-A1- 2006 066 258
- US-A1- 2006 284 568
- US-A1- 2008 018 261
- US-B1- 6 181 079
- US-B1- 6 556 457
- US-B1- 6 563 718
- chen at al: "High Speed Digital Isolators Using Microscale On-Chip Transformers" 20. Mai 2008 (2008-05-20), XP002578119 Gefunden im Internet: URL:http://www.datasheetarchive.com/datash eet-pdf/03/DSA0038500.html> [gefunden am 2010-04-16]

## Beschreibung

Die vorliegende Erfindung bezieht sich auf das Gebiet der Betriebsgeräte für Leuchtmittel, insbesondere auf das Gebiet der Betriebsgeräte für organische und anorganische Leuchtdioden (LEDs) oder Gasentladungslampen.

Es ist bereits bekannt, dass Betriebsgerät für Leuchtmittel eine galvanische Trennung zwischen einem Niederspannungsbereich und einem Hochspannungsbereich des Geräts aufweisen. Dabei sind insbesondere zweistufige Betriebsgeräte bekannt, wobei ein Wandler (Konverter), der die Leuchtmittel versorgt, unter Potentialtrennung über eine Steuerschaltung auf der Netzspannungsseite (Primärseite der Potentialtrennung) angesteuert. Falls Rückführsignale von der Sekundärseite der Potentialtrennung, also insbesondere aus dem Bereich der Leuchtmittel zu der Steuerschaltung zurückgeführt werden sollen, ist für diese Rückführung ebenfalls eine Potentialtrennung vorgesehen. Die Ansteuerung auf der Sekundärseite der Potentialtrennung erfolgt durch eine weitere Steuerschaltung, die eine von der erstgenannten, auf Netzspannungspotential liegenden Steuerschaltung getrennt ist.

In der Offenlegungsschrift US 2008/0018261 A1 ist gemäß einer Ausführungsform ein Betriebsgerät für LED beschrieben, bei dem ein Fly-Back-Konverter und ein ungesteuerter Buck-konverter vorgesehen sind. Überdies zeigt die US 2008/0018261 A1 in einer anderen Ausführungsform ein Betriebsgerät für LED, bei dem ein Fly-Back-Konverter und ein PWM-Kontroller vorgesehen sind, wobei der PWM-Kontroller unidirektional mit dem Fly-Back-Konverter kommuniziert und dem PWM-Kontroller externe Dimmbefehle über einen Optokoppler zugeführt werden.

In dem Artikel "High Speed Digital Isolators Using Microscale On-Chip Transformers" der Autoren Baoxing Chen, John Wyne und Ronn Kliger, erschienen in der Zeitschrift "Elektronik Magazine" im Juli 2003, wird ein Digital-Isolator vorgeschlagen.

In der US 6,563,718 A ist ein Fly-Back Converter beschrieben. Zwischen der Primärseite und der Sekundärseite ist eine bidirektionale Kommunikation ausgebildet.

In der EP 0 308 260 A2 ist eine Anordnung zum Transfer von Energie beschrieben. Die Anordnung ist zum paketweisen Übertragen von Energie vorgesehen. Die Übertragung der paketweisen Daten von einem Eingang zu einem Ausgang erfolgt dabei als bidirektionaler Kommunikationspfad. Eine Überwachungseinheit ist dabei mit einer Kontrolleinheit kapazitiv gekoppelt überträgt unidirektional Signale.

Der vorliegenden Erfindung liegt nunmehr die Aufgabe zugrunde, eine Schaltung insbesondere zum Betrieb von organischen und anorganischen LEDs vorzuschlagen.

Diese Aufgabe wird durch die Merkmale der unabhängigen Ansprüche gelöst. Vorteilhafte Weiterbildungen der Erfindung sind Gegenstand der Unteransprüche.

Ein erster Aspekt der Erfindung bezieht sich auf ein Betriebsgerät zum Betreiben mindestens eines Leuchtmittels, insbesondere einer oder mehrerer LEDs, aufweisend:
- einen direkt oder indirekt mit Netzspannung versorgten ersten Wandler mit einem ersten Bezugspotential,
- einen vom ersten Wandler galvanisch getrennten zweiten Wandler mit einem zweiten Bezugspotential zum Versorgen eines Lastkreises mit dem Leuchtmittel, insbesondere mit einer oder mehreren LEDs, und
- eine erste Logikschaltung zum Steuern des ersten Wandlers und eine zweite Logikschaltung zum Steuern des zweiten Wandlers,
wobei die erste Logikschaltung und die zweite Logikschaltung über eine Schnittstelle potentialgetrennt miteinander verbunden sind.

Die potentialgetrennte Schnittstelle kann eine bidirektionale Schnittstelle sein.

Weiterhin kann die potentialgetrennte Schnittstelle als integrierte Spule, integrierte Luftspule, als externer Transformator oder als Piezo-Transformator ausgebildet sein.

Die erste Logikschaltung, die zweite Logikschaltung und die potentialgetrennte Schnittstelle können in einem integrierten Schaltkreis integriert sein.

Über die potentialgetrennte Schnittstelle können Messwerte, Zustände und/oder Steuersignale zwischen den beiden Logikschaltungen übertragen werden.

Das Betriebsgerät kann mindestens einen durch die erste und/oder die zweite Logikschaltung angesteuerten Leistungsschalter aufweisen, wodurch der erste und/oder der zweite Wandler getaktet wird.

Die erste Logikschaltung kann dazu ausgebildet sein, über eine Kommunikationseinheit externe Befehle, bspw. digitale Befehle, insbesondere DALI (Digital Addressable Lighting Interface)-Befehle oder Statusinformationen zu empfangen, und Statusinformationen insbesondere Fehlerrückmeldungen zu übersenden.

Die erste Logikschaltung kann den ersten Wandler derart steuern, dass eine aktive Leistungsfaktorkorrektur mit getaktetem Schalter ("active PFC") bewirkt wird.

Primärseitige Betriebsparameter-Signale, die auf dem ersten Bezugspotential liegen, können der ersten Logikschaltung zurückgeführt werden.

Sekundärseitige Betriebsparameter-Signale, die auf dem zweiten Bezugspotential liegen, können der zweiten Logikschaltung zurückgeführt werden.

Die zweite Logikschaltung kann dazu ausgebildet sein, das Leuchtmittel anzusteuern.

Rückführsignale insbesondere aus dem Bereich des Lastkreises können zu der zweiten Logikschaltung derart zurückgeführt werden, dass Istwerte zur Regelung des Leuchtmittelbetriebs ausgewertet und/oder Fehler des Leuchtmittels erkannt werden können.

Ein weiterer Aspekt der Erfindung bezieht sich auf ein Betriebsgerät zum Betreiben mindestens eines Leuchtmittels, insbesondere einer LED, aufweisend:
- einen mit Netzspannung versorgten ersten Wandler mit einem ersten Bezugspotential,
- einen vom ersten Wandler galvanisch getrennten zweiten Wandler mit einem zweiten Bezugspotential zum Versorgen eines Lastkreises mit dem Leuchtmittel, und
- eine erste Logikschaltung zum Steuern des ersten Wandlers und eine zweite Logikschaltung zum Erfassen von Messwerten,
wobei die erste Logikschaltung und die zweite Logikschaltung über eine potentialgetrennte Schnittstelle miteinander verbunden sind.

Ein weiterer Aspekt der Erfindung bezieht sich auf ein Betriebsgerät zum Betreiben mindestens eines Leuchtmittels, insbesondere einer LED, aufweisend:
- einen mit Netzspannung versorgten Wandler zum Versorgen eines Lastkreises mit dem Leuchtmittel, und
- eine erste Logikschaltung zum Steuern des Wandlers und eine zweite Logikschaltung zum Erfassen von Messwerten, wobei die erste Logikschaltung und die zweite Logikschaltung über eine potentialgetrennte Schnittstelle miteinander verbunden sind.

Der Wandler kann eine mit einer Eingangs-Wechselspannung versorgte Induktivität und einen Schalter zur Steuerung des Ladens bzw. Entladens der Induktivität aufweisen.

Ein weiterer Aspekt der Erfindung bezieht sich auf eine Notlichtbeleuchtung, die vorzugsweise ein Leuchtmittel, insbesondere eine oder mehrere LEDs sowie ein Betriebsgerät der oben erläuterten Art aufweist. Der Ausfall der Netzspannungsversorgung wird vorzugsweise erkannt, um daraufhin unverzüglich das Leuchtmittel ausgehend von einer autonomen Spannungsversorgung, insbesondere einer Batterie zu betreiben.

Ein weiterer Aspekt der Erfindung bezieht sich auf eine Leuchte, insbesondere für eine Notlichtbeleuchtung, die ein Betriebsgerät der oben erläuterten Art aufweist.

Ein weiterer Aspekt der Erfindung bezieht sich auf eine LED Lampe, insbesondere eine LED Lampe für den Ersatz einer konventionellen Glühlampe, die ein Betriebsgerät der oben erläuterten Art aufweist.

Ein weiterer Aspekt der Erfindung bezieht sich auf eine integrierte Steuereinheit, insbesondere ASIC (Anwendungsspezifische Integrierte Schaltung), die für ein Betriebsgerät der oben erläuterten Art ausgebildet ist.

Weitere Merkmale und Vorteile der Erfindung werden deutlich beim Lesen der folgenden Beschreibung bevorzugter Ausführungsformen, die auf die Zeichnung Bezug nimmt.
- Fig. 1: zeigt eine schematische Ansicht des Betriebsgeräts für Leuchtmittel gemäß einem Ausführungsbeispiel der vorliegenden Erfindung, bei dem ein erster Wandler als Sperrwandler ausgebildet ist,
- Fig. 2: zeigt eine Abwandlung des in Fig. 1 gezeigten Ausführungsbeispiels dahingehend, dass der erste Wandler als Vorwärtswandler ausgebildet ist,
- Fig. 3: zeigt eine Ausführungsform der Erfindung, bei der ein zweiter Wandler als Buck-Boost-Konverter ausgebildet ist, und
- Fig. 4: zeigt ein weiteres Ausführungsbeispiel (nicht erfindungsgemäß).
- Fig. 5: zeigt ein weiteres Ausführungsbeispiel (nicht erfindungsgemäß).

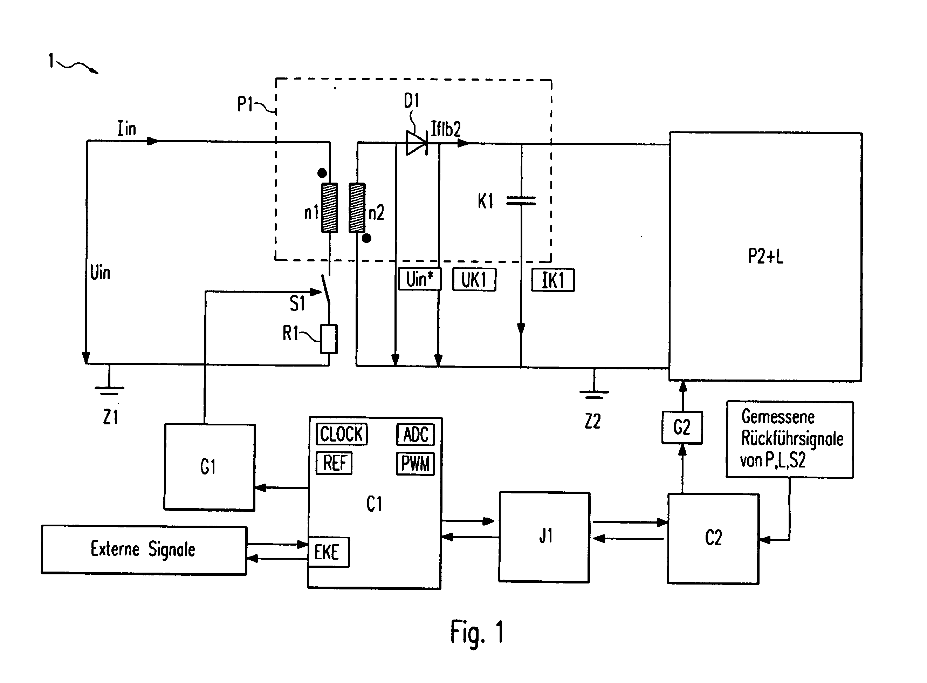

Das in Fig. 1 dargestellte und allgemein mit dem Bezugszeichen 1 versehene Betriebsgerät für Leuchtmittel ist ein erstes Ausführungsbeispiel gemäß der Erfindung.

Das Betriebsgerät 1 ist vorzugsweise zum Betreiben einer LED bzw. einer Mehrzahl von LEDs vorgesehen. Das Betriebsgerät 1 ist eingangsseitig an ein Stromversorgungsnetz angeschlossen, welches eine Netzversorgungsspannung Uin und einen Netzversorgungsstrom Iin zur Verfügung stellt.

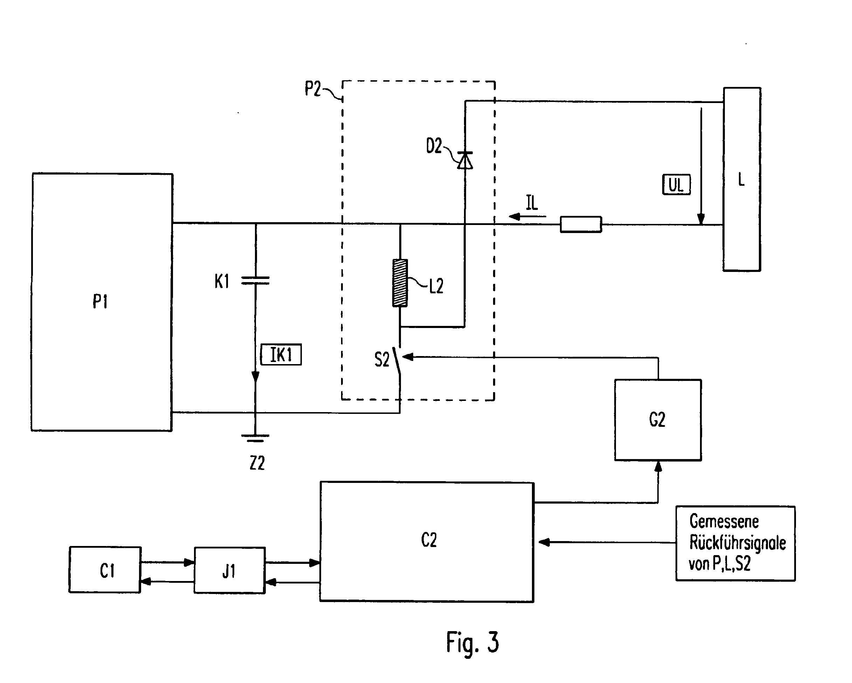

Wie auf Fig. 1 dargestellt weist das Betriebsgerät 1 unter anderem einen ersten Wandler bzw. eine erste Leistungswandlungsstufe P1 und einen zweiten Wandler P2, der einen Lastkreis L mit einem oder mehreren Leuchtmitteln vorzugsweise LEDs versorgt. Der erste Wandler P1 hat ein Bezugspotential Z1 und der zweite Wandler P2 ein Bezugspotential Z2. Eine besondere Ausführungsform des zweiten Wandlers P2 wird in Fig. 3 gezeigt.

Der Wandler P1 ist im dargestellten ersten Ausführungsbeispiel durch einen sog. isolierten Sperrwandler oder Flyback-Konverter gebildet, der einen Transformator mit einer Primärwicklung n1 und einer Sekundärwicklung n2 aufweist. In bekannter Weise kann durch ein entsprechendes abwechselndes Öffnen und Schließen eines steuerbaren Schalters S1 die von der Netzversorgungs-Spannung Uin zur Verfügung gestellte Energie auf die Sekundärseite des Wandlers P1 übertragen und zum Versorgen des zweiten Wandlers P2 genutzt werden. Der Schalter S1 kann z.B. als Transistor bzw. als MOSFET-Transistor ausgeführt werden. Die Energieübertragung findet dabei im geöffneten Zustand des Schalters S1 statt, wobei hierzu auf der Ausgangsseite des isolierten Sperrwandlers P1 ferner eine Diode D1 vorgesehen ist.

Eine auf Fig. 1 mit C1 beizeichnete erste Logikschaltung steuert auf der Primärseite des ersten Wandlers P1 und über einen Treiber G1 den Schalter S1 an. Der Schalter S1 wird in bekannter Art und Weise von dieser Logikschaltung C1 angesteuert, bspw. mittels PWM (Pulsweitenmodulation)-Signalen.

Auf der Primärseite des ersten Wandlers P1, d.h. an der Wicklung n1, liegt also die Netzspannung Uin, die ausgangsseitig in eine Spannung Uin* umgewandelt wird. Über eine Diode D1 bildet sich ein Strom Iflb2 der ein Energiespeicherelement K1 auflädt, an dem sich eine Spannung UK1 einstellt. Dieses Energiespeicherelement K1 kann beispielsweise einen Kondensator bspw. einen Elektrolytkondensator oder eine Batterie sein. Die Benutzung einer Batterie wird unten näher erläutert. Somit stellt sich an dem Energiespeicherelement K1 eine stabilisierte Zwischenspannung UK1 ein, ausgehend von der die zweite Wandlerstufe P2 und der Lastkreis L bzw. die Leuchtmittel gespeist werden können.

Wie bereits erwähnt, ist zwischen der in Fig. 1 gezeigte vorzugsweise digitale Logikschaltung C1 und dem Schalter S1 ein Treiber G1 vorgesehen. Alternativ oder zusätzlich dazu kann die Logikschaltung auch einen internen Treiber (nicht gezeigt) aufweisen.

Wie in Fig. 1 ersichtlich, kann die vorzugsweise digital integrierte Logikschaltung C1 dazu ausgebildet sein, externe Signale entgegenzunehmen bzw. beispielsweise über eine angeschlossene Busleitung (nicht gezeigt) Signale auszugeben. Bei diesen Signalen kann es sich beispielsweise um Befehle (wie beispielsweise Ein- oder Ausschaltbefehle bzw. Dimmwert-Vorgaben) oder Statusinformation (insbesondere die Information bzgl. eines Netzspannungsausfalls im Falle der Anwendung der Erfindung auf Notbeleuchtungen) handeln.

Demzufolge ist eine Einheit EKE zur externen bidirektionaler Kommunikation in der ersten Logikschaltung C1 vorgesehen. Diese Einheit EDE kann speziell dazu ausgebildet sein, ein Steuerprotokoll zur Steuerung digitaler lichttechnischer Betriebsgeräte, wie bspw. das DALI Protokoll (Digital Addressable Lighting Interface) zu unterstützen.

Die erste Logikschaltung C1 kann auch dazu ausgebildet sein, Rückführsignale von der Primärseite des ersten Wandlers P1 zu erfassen (in Fig. 1 nicht gezeigt). Insbesondere kann die Eingangsspannung Uin oder, mittels eines in Serie zum Schalter S1 geschalteten Mess-Widerstands R1, auch der Strom durch den Schalter S1 von der ersten Logikschaltung C1 erfasst und ermittelt werden. Zusätzlich zur ersten Logikschaltung C1 ist auch eine zweite Logikschaltung C2 auf der entkoppelten Sekundärseite vorgesehen. Diese weitere Logikschaltung C2 ist dazu vorgesehen, Rückführsignale von der Sekundärseite zu erfassen und gegebenenfalls auch aktive Elemente auf der Sekundärseite (Schalter etc.) vorzugsweise über einen Treiber G2 anzusteuern. Die Rückführsignale können dabei insbesondere aus dem Bereich des Lastkreises L, dem Bereich eines weiteren Schalters zum Steuern des zweiten Wandlers P2, dem Bereich des zweiten Wandlers P2 oder der Sekundärseite des Wandlers P1 (bspw. die Spannung Uin*) stammen.

Bei der Erfassung solcher Rückführsignale ist vorzugsweise keine galvanische Trennung erforderlich, da diese Rückführsignale auf dem gleichen Bezugspotential liegen, wie die Logikschaltung C2.

Zu der Logikschaltung C2 können insbesondere Rückführungssignale zurückgeführt werden, die als Istwerte zur Regelung des Leuchtmittelbetriebs ausgewertet werden.

Die beiden Logikschaltungen C1, C2 sind über ein Potentialtrennungs-Interface bzw. eine Schnittstelle J1 miteinander verbunden. Das erfindungsgemäße Betriebsgerät 1 weist also zwei Logikschaltungen C1, C2 auf, die über die Schnittstelle J1 potential oder galvanisch getrennt sind. Somit kann eine vollständige galvanische Entkopplung zwischen der Sekundärseite und der mit Netzspannung versorgten Primärseite der Betriebsschaltung bzw. Treiberschaltung 1 gewährleistet werden.

Diese Schnittstelle J1 ist vorzugsweise bidirektional. Entsprechend können Signale von der ersten Logikschaltung C1 zu der zweiten Logikschaltung C2 übertragen werden. Bspw. kann dann die zweite Logikschaltung C2 aktive Elemente auf der Sekundärseite abhängig von der ersten Logikschaltung C1 zugeführten externen Befehlen ansteuern.

Signale können aber auch in umgekehrter Richtung zwischen den Logikschaltungen C1, C2 über die Schnittstelle J1 übertragen werden. Als Beispiel dafür können von der zweiten Logikschaltung C2 erfassten Rückführsignale über die Schnittstelle J1 und über die erste Logikschaltung C1 als Statusinformation extern weitergegeben werden.

Es können über die potentialgetrennte Schnittstelle J1 verschiedene Informationen übermittelt werden, wie bspw. Messwerte, Zustände und/oder Steuersignale. Die Information kann asynchron übermittelt werden. Vorzugsweise wird aber ein Multiplexverfahren benutzt, um mehrere Messwerte, Zustände oder Steuersignale gleichzeitig über den jeweiligen physikalischen Kanal zwischen Schnittstelle J1 und Logikschaltung C1, C2 übertragen zu können.

Gemäß bevorzugten Ausführungsformen der Erfindung können die Logikschaltungen C1, C2 als IC (Integrierter Schaltkreis) oder ASIC (Anwendungsspezifische Integrierte Schaltung, engl. "application specific integrated circuit"), insbesondere als Digitalschaltung ausgebildet sein.

Gemäß weiteren bevorzugten Ausführungsformen sind die Logikschaltungen C1, C2 und die Schnittstelle J1 in einem IC integriert (bspw. in einem "multi chip module"). Die Schnittstelle J1 kann bspw. mittels integrierter Luftspule in einem derartigen IC integriert werden. Eine Luftspule ermöglicht hochfrequente Übertragungen zwischen den Logikschaltungen C1, C2.

Wahlweise können auch die Treiber G1 und/ oder G2 in den IC integriert werden. Die Übertragung über die Schnittstelle J1 kann mittels hochfrequenter Übertragung erfolgen (beispielsweise im MHz- oder GHz-Bereich).

Indessen kann die potentialtrennende Schnittstelle J1 auch als externer Transformator (vorzugsweise ohne Kern) ausgebildet sein.

Weiterhin ist auch ein Piezo-Transformator als potentialtrennende Schnittstelle J1 einsetzbar. Bei einem derartigen Piezo-Transformator wird die Kopplung der Primär- und Sekundärseite rein mechanisch herbeigeführt.

Jede Logikschaltung C1, C2 kann einen Taktgeber CLOCK, einen Analog/Digital-Wandler ADC, Referenzspannungen REF und einen PWM-Treiber aufweisen. Über den Taktgeber CLOCK werden die Komponenten der jeweiligen Logikschaltung C1, C2 synchronisiert. Die Logikschaltungen C1, C2 können über eine externe Spannungsversorgung mit einer Betriebsspannung versorgt werden oder diese intern generieren.

Innerhalb der Logikschaltung C1 bzw. C2 sind vorzugsweise mehrere Analog/Digital-Wandler ADC für die Rückführsignale sowie einen digital arbeitenden Regelkreis angeordnet. Der Regelkreis ist dabei für das Ansteuern und Takten des jeweiligen angeschlossenen Wandlers P1 bzw. P2 zuständig. Dieses Ansteuern und Takten erfolgt vorzugsweise mittels des PWM-Treibers über PWM-Signale.

Diese Komponenten sind nicht zwingend in beiden Logikschaltungen vorgesehen. Vielmehr kann die Struktur einer der beiden Logikschaltungen C1, C2 sehr stark reduziert werden. Das Minimum bzw. die Kernfunktion, die jede Logikschaltung C1, C2 zu erledigen im Stande sein muss, ist, die üblicherweise hochfrequenzmodulierte Übertragung über die Schnittstelle J1 dekodieren bzw. kodieren zu können. Alle anderen Komponenten oder Regelungsalgorithmen bspw. zur Auswertung von Messsignalen können in einer der beiden Logikschaltungen C1, C2 konzentriert sein. Speicher können auch auf einer der beiden Seiten C1, C2 konzentriert sein.

Vorzugsweise kommuniziert auch nur eine der beiden Logikschaltungen C1, C2 extern. Dementsprechend weist vorzugsweise nur die erste Logikschaltung C1 die Einheit EKE zur externen bidirektionaler Kommunikation. Diese externe Kommunikationseinheit EKE kann beispielsweise über einen angeschlossenen Bus (nicht gezeigt) zum Empfang von Steuersignalen oder zur Ausgabe von Rückmeldungen oder Statussignalen über den Bus dienen.

Die Leistungswandlerstufe P1 kann in unterschiedlicher Weise ausgeführt werden. Außer als isolierter Sperrwandler wie in Fig. 1 gezeigt, kann sie bspw. als Vorwärtswandler oder auch als andere potentialgetrennnte Konverterschaltungen ausgebildet sein.

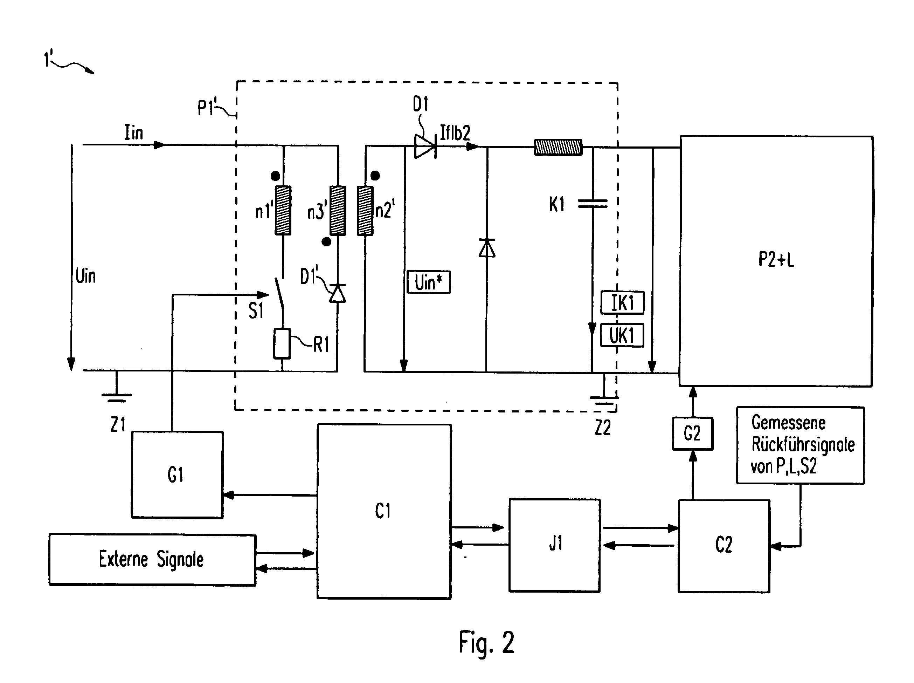

Unter Bezugnahme auf Fig. 2 wird ein weiteres Betriebsgerät 1' gemäß der Erfindung erläutert. Dieses Ausführungsbeispiel unterscheidet sich insofern vom ersten, dass die erste Wandlerstufe P1' als Vorwärtswandler ausgeführt ist. Dieser Vorwärtswandler P1' ist besonders für den kontinuierlichen Betrieb (continuous mode) ausgelegt.

Beim Wandler P1' ist also wiederum ein Transformator mit Wicklungen n1', n2' primärseitig über den Schalter S1 getaktet. Die beiden Wicklungen n1' und n2' sind gleichsinnig gewickelt, so dass die Übertragung von Energie immer dann erfolgt, wenn der Schalter S1 angesteuert durch die Logikschaltung C1 eingeschaltet ist.

Dazu ist primärseitig noch eine dritte Wicklung n3' vorgesehen, zu der in Serie eine Diode D1' geschaltet ist, und wobei die Wicklung der dritten Spule n3' gegensinnig zu den ersten Spulen n1' und n2' ist. Diese Spule n3' dient dazu, die Magnetisierung der primärseitigen Spule n1' abzubauen.

Fig. 3 zeigt nunmehr detailliert eine mögliche Ausgestaltung des zweiten Wandlers P2, die sich sowohl mit einem isolierten Sperrwandler P1 gemäß Fig. 1 oder mit einem Vorwärtswandler P1' 2 gemäß Fig. 2 kombinieren lässt.

Der zweite Wandler P2 kann bspw. als Sperrwandler oder Schaltregler ausgeführt werden. Der zweite Wandler P2 weist einen steuerbaren Schalter S2 in Serie mit einer Induktivität L2 sowie eine Diode D2 auf.

Durch alternierendes Ansteuern des Schalters S2 durch die Logikschaltung C2 über einen Treiber G2 wird auf diese Weise der LED-Anordnung ein Strom zur Verfügung gestellt, über welchen diese betrieben wird. Durch Wahl der Frequenz und/oder des Tastverhältnisses der Ansteuerung des Schalters S2 lässt sich somit die Spannung an dem Energiespeicherelement K1 in eine für den Betrieb der Leuchtmittel geeignete Spannung herauf- oder herabsetzen.

Der Treiber G2 kann wahlweise in der Logikschaltung C2 integriert sein oder als eigene Einheit ausgebildet sein.

Für die Steuerung des Schalters S2 durch die Logikschaltung C2 ist keine galvanische Trennung notwendig. Ebenso ohne galvanische Trennung erfolgt die Steuerung des Schalters S1 durch die erste Logikschaltung C1. Mit anderen Worten werden die Schalter S1, S2 ohne Potentialtrennung von den Logikschaltungen C1, C2 gesteuert.

Mögliche Rückführsignale auf der Sekundärseite sind der Spannungsabfall UL über der LED-Anordnung sowie der Strom IL durch die LED-Anordnung und der Strom durch den Schalter S2.

Durch Ansteuerung des Schalters S2 auf der Sekundärseite kann beispielsweise über PWM-Modulation ein Dimmen erreicht werden.

Die Erfindung ist nicht nur auf die dargestellte Ausführungsbeispiele beschränkt. Denkbar ist es auch, dass es sich bspw. beim ersten Wandler P1 um einen freischwingenden Sperrwandler handelt. Insgesamt ist erfindungsgemäß also nur ein Schalter entweder auf der Primärseite oder der Sekundärseite notwendig. Die Erfindung umfasst entsprechend auch Ausführungsformen, bei denen kein Schalter zum Steuern des ersten Wandlers P1, P1' oder des zweiten Wandlers P2 vorliegt. Bei solchen Variante wird nur auf einer Potentialseite der Schalter S1, S2 angesteuert.

Es wird nunmehr die Notbeleuchtung als typisches Anwendungsbeispiel der Erfindung näher erläutert.

Bei der Gestaltung als Notlichtbeleuchtung ist das Energiespeicherelement K1 eine Batterie, die ausgehend von dem isolierten Sperrwandler oder Vorwärtswandler geladen werden kann und im Notlichtfall die Leuchtmittelanordnung versorgt.

In einer Benutzung als Notbeleuchtung kann die sekundärseitige Netzspannung zur Erkennung des Notlichtfalls von der zweiten Logikschaltung C2 überwacht werden. Die zweite Logikschaltung C2 kann dabei auch andere Betriebsparameter der Sekundärseite des Notlichtgeräts erfassen.

Während eines Ladebetriebs als Notlichtgerät ist üblicherweise ausschließlich der erste Wandler P1 aktiv, um die Batterie dauerhaft aufzuladen. Erst für den Fall, dass ein Notzustand vorliegt, der insbesondere durch Abweichungen der in Fig. 1 und 2 gezeigten sekundärseitigen Netzversorgungsspannung Uin* von vorbestimmten Soll-Werten gekennzeichnet ist, wird ein Notlichtbetrieb eingeleitet.

Alternativ dazu und statt die Netzspannung indirekt über die sekundärseitige Netzversorgungsspannung Uin* zu überwachen, kann die Überwachung der Netzspannung auch primärseitig erfolgen. Es ist in dem Fall die erste Logikschaltung C1, die direkt die Netzspannung Uin erfasst.

Im Notlichtbetrieb wird dann der zweite Schalter S2 alternativ ein- und ausgeschaltet. Das Tastverhältnis des Ein- und Ausschaltens wird von der Logikschaltung C2 entsprechend angepasst, um die Höhe des der LED zugeführten Stroms und damit die Leistung, bei welcher die LED betrieben wird, einzustellen.

Die Ansteuerung der Last L und der Batteriemanagement werden also sekundärseitig durchgeführt, während die Steuerung der Batterieladung primärseitig erledigt wird. Die Überwachung der Netzspannung kann wie bereits erwähnt primär- oder sekundärseitig durchgeführt werden.

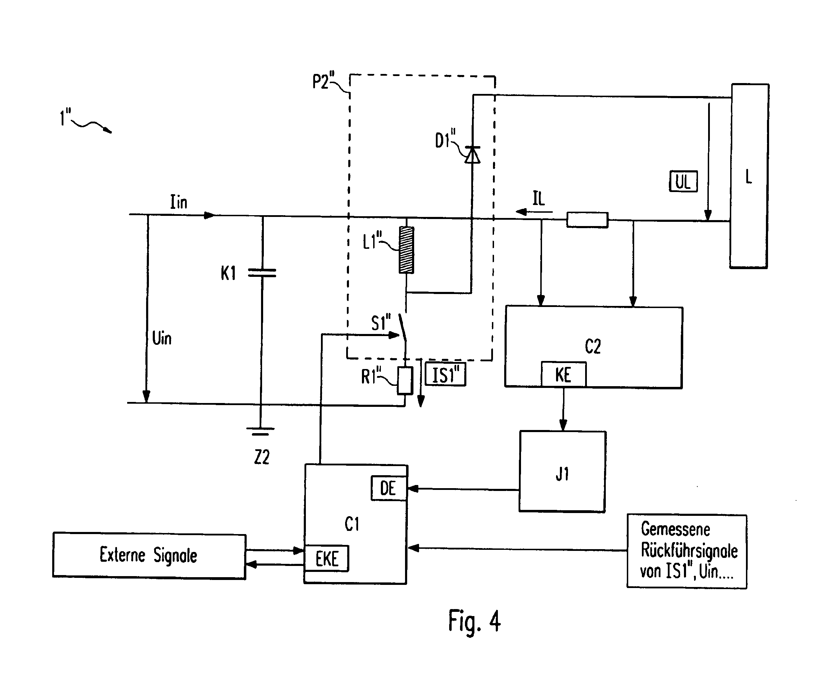

Fig. 4 zeigt nunmehr ein weiteres Ausführungsbeispiel eines erfindungsgemäßen Betriebsgeräts 1''.

Das Betriebsgerät 1'' unterscheidet sich dadurch von den ersten Ausführungsbeispielen, dass es nur einen Wandler P'' aufweist. Die weiteren im Zusammenhang mit den ersten Ausführungsbeispielen aufgeführten Erläuterungen gelten entsprechend für dieses Ausführungsbeispiel des Betriebsgeräts 1''.

Dieser Wandler P'' kann als Leistungsfaktorkorrektur (PFC)-Schaltung ausgestaltet sein. Vorzugsweise ist der Wandler P'' ein Wechselspannungs- / Gleichspannungs-Leistungswandler.

Die Eingangs-Netzwechselspannung Uin wird von einem Glättungskondensator K1 gesiebt und einer Induktivität L1'', i.e. einer Spule, zugeführt. Die Induktivität L1'' bildet mit einer Diode D1'' eine Serienschaltung, die zwischen einem Eingangsanschluss, wo die Eingangs-Wechselspannung Uin anliegt, und einem Ausgangsanschluss, wo eine Ausgangs-Gleichspannung UL zum Versorgen des Lastkreises L bereitgestellt wird, geschaltet ist.

An den Verbindungsknoten zwischen der Induktivität L1'' und der Diode D1''ist ein steuerbarer Schalter S1'' angeschlossen.

Ist der Schalter S1'' eingeschaltet, so ist die Induktivität L1'' gegen Masse kurzgeschlossen und die Diode D1'' gesperrt. Die Induktivität L1'' lädt sich entsprechend auf, so dass Energie in der Induktivität L1'' gespeichert wird.

Ist dagegen der Schalter S1'' ausgeschaltet, so ist die Diode D1'' leitend, was dazu führt, dass die Induktivität L1'' sich dann über die Diode D1'' vorzugsweise in einen Gleichspannungskondensator (nicht gezeigt) entladen kann.

Der Schalter S1'' wird von der ersten Logikschaltung C1 in bekannter Art und Weise angesteuert. Der Logikschaltung C1 werden verschiedene Messsignale aus der Eingangsseite des Wandlers P1'' zugeführt. Wie auf Fig. 4 dargestellt werden dabei insbesondere die eingangseitigen Messgrößen Netzeingangsspannung Uin und, über einen in Serie zum Schalter S1'' geschalteten Widerstand R1'', Schalterstrom IS1'' direkt der Logikschaltung C1 zugeführt.

Die zweite Logikschaltung C2 dient dazu, ausgangsseitige Rückführsignale zu messen. Im Ausführungsbeispiel der Fig. 4 wird der Strom IL durch den Lastkreis L bzw. durch die Leuchtmittelanordnung im Freilaufpfad erfasst.

Die von der ersten Logikschaltung C1 und von der zweiten Logikschaltung C2 erfassten Messwerte können im Übrigen auch Zustandssignale sein, die also vorzugsweise einen 1-Bit-Messwert darstellen.

Das in Fig. 4 gezeigte Betriebsgerät 1'' stellt eine reduzierte Ausführungsform (nicht erfindungsgemäß) dahingehend dar, dass die Schnittstelle J1 unidirektional ausgeführt ist. Es handelt sich nur um eine potentialgetrennte Erfassung in diesem Fall des Stroms IL durch die LEDs. Die zweite Logikschaltung C2 kodiert mittels einer Kodiereinheit KE den erfassten Messwert zur Übertragung über die Schnittstelle J1. Die erste Logikschaltung umfasst eine entsprechende Dekodiereinheit DE zum Empfangen und Dekodieren der über die Schnittstelle J1 übertragene Signale.

Die zweite Logikschaltung C2 weist außer der Kodiereinheit KE vorzugsweise keine weitere Logik auf. Sämtliche weitere Logik, einschließlich der Einheit zur externen bidirektionalen Kommunikation EKE, ist in der Logikschaltung C1 konzentriert.

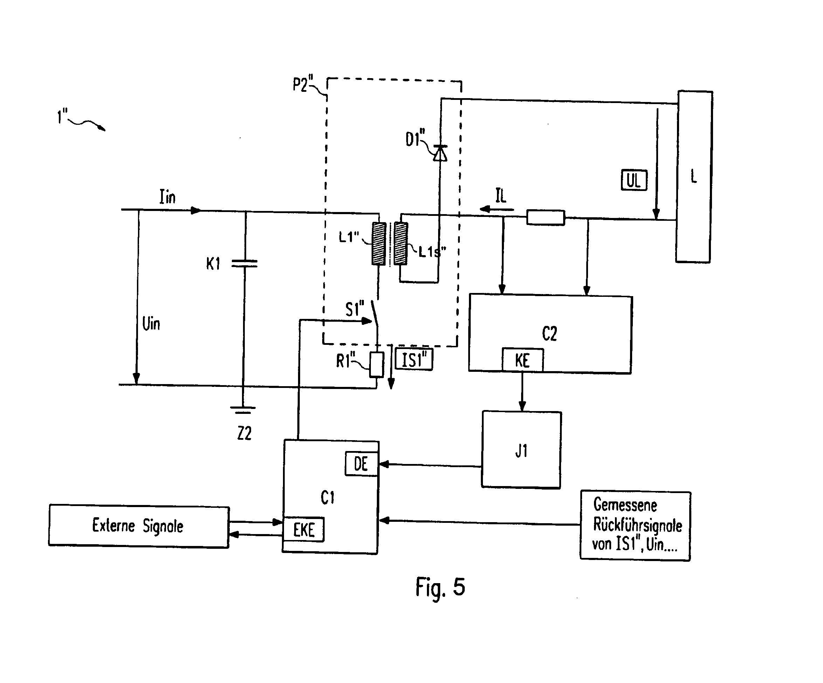

Die nicht erfindungsgemäße Schaltungsvariante nach Fig. 5 unterscheidet sich von der nicht erfindungsgemäßen Ausführungsform nach Fig. 4 dadurch, dass die Induktivität L1'' magnetisch mit einer Sekundärwicklung L1s'' gekoppelt ist. Mit dieser Ausführungsform soll demonstriert werden, dass das in der Fig. 4 angewendete Sperrwandler-Prinzip für den Wandler P'' nicht zwingend ist, sondern dass stattdessen auch ein anderes Schaltregler-Prinzip verwendet werden kann.

Die in Fig. 5 dargestellte Schaltungsvariante stellt ein Beispiel für ein isoliertes Sperrwandler-Prinzip dar. Es kann der Wandler P'' aber beispielsweise auch durch eine resonante Halbbrücke mit einem Transformator zur Potentialtrennung gebildet werden.

Bei Anwendung eines isolierten Sperrwandler-Prinzips kann die Induktivität L1'' durch eine Induktivität L1'' mit einer magnetisch gekoppelten Sekundärwicklung L1s'', die somit gemeinsam einen Transformator bilden, ersetzt werden. Die Sekundärwicklung L1s'' kann dabei über eine Diode D1'' und einen optionalen Ladekondensator C1'' (parallel zu dem Lastkreis L, C1'' ist nicht dargestellt) den Lastkreis L speisen. Die Induktivität L1'' kann zusätzlich mit einer weiteren Auskoppelwicklung L13'' magentisch gekoppelt sein (nicht dargestellt).

Dabei kann durch die erste Logikschaltung C1 beispielsweise in der Durchschaltphase des Schalters S1'' als Istwert-Signal der Spannungsabfall über dem Widerstand R1'' überwacht werden. In der Sperrphase kann beispielsweise durch die erste Logikschaltung C1 die Spannung über der Induktivität L1'' und / oder der Nulldurchgang des Stromes durch die Induktivität L1'' ermittelt werden. Beispielsweise kann ein Widerstand (nicht dargestellt) die Spannung an dem Verbindungspunkt zwischen der Induktivität L1'' und dem Schalter S1'' abgreifen. Durch die zweite Logikschaltung C2 kann der Strom IL durch die LED an der Sekundärseite des Wandlers P1'' abgegriffen werden und ein entsprechendes Signal über die Schnittstelle J1 an die erste Logikschaltung C1 übertragen werden.

Auf diese Weise lässt sich beispielsweise ein Betriebsgerät für eine LED auf eine sehr kompakte Weise aufbauen, so dass dieses Betriebsgerät aufgrund seiner kompakten Bauweise und der vorhandenen Potentialtrennung sehr gut in eine LED Lampe, also beispielsweise eine LED Lampe für den Ersatz einer konventionellen Glühlampe oder einer Energiesparlampe basierend auf einer Leuchtstofflampe, integrieren lässt. Dabei kann aufgrund der kompakten Bauform das Betriebsgerät sehr gut in dem Lampensockel der LED Lampe angeordnet werden.

Der Lampensockel der LED Lampe kann beispielsweise ein E27 Sockel, B22 Sockel, GU4 oder GU10 Sockel sein.

## Patentansprüche

1. Betriebsgerät zum Betreiben mindestens eines Leuchtmittels, insbesondere einer LED, wobei das Betriebsgerät aufweist:
- einen mit Netzspannung (Uin) versorgten ersten Wandler (P1) mit einem ersten Bezugspotential (Z1), wobei der erste Wandler (P1) einen Transformator mit einer Primärwicklung (n1) und einer Sekundärwicklung (n2) aufweist,
- einen von der Primärwicklung (n1) des ersten Wandlers (P1) galvanisch getrennten zweiten Wandler (P2) mit einem zweiten Bezugspotential (Z2) zum Versorgen eines Lastkreises (L) mit dem Leuchtmittel, wobei der zweite Wandler (P2) als Schaltregler ausgebildet ist, und
- eine erste Logikschaltung (C1) zum Steuern des ersten Wandlers (P1) und eine zweite Logikschaltung (C2) zum Steuern des zweiten Wandlers (P2),
**dadurch gekennzeichnet, dass**
- die erste Logikschaltung (C1) und die zweite Logikschaltung (C2) über eine potentialgetrennte bidirektionale Schnittstelle (J1) zur bidirektionalen Übermittlung von Informationen zwischen der ersten Logikschaltung (C1) und der zweiten Logikschaltung (C2) miteinander verbunden sind,
- der ersten Logikschaltung (C1) externe Befehle zuführbar sind, wobei die Befehle Dimmwert-Vorgaben sind, und
- die zweite Logikschaltung (C2) aktive Elemente auf der Sekundärseite der galvanischen Trennung abhängig von den Dimmwert-Vorgaben ansteuert.

2. Betriebsgerät nach Anspruch 1,
wobei die potentialgetrennte Schnittstelle (J1) als in einem IC integrierte Luftspule, als zu dem IC externer Transformator oder als Piezo-Transformator ausgebildet ist.

3. Betriebsgerät nach einem der vorhergehenden Ansprüche,
wobei die erste Logikschaltung (C1), die zweite Logikschaltung (C2) und die potentialgetrennte Schnittstelle (J1) in einem integrierten Schaltkreis integriert sind.

4. Betriebsgerät nach einem der vorhergehenden Ansprüche,
wobei über die potentialgetrennte Schnittstelle (J1) Messwerte, Zustände und/oder Steuersignale zwischen den zwei Logikschaltungen (C1, C2) übertragen werden.

5. Betriebsgerät nach einem der vorhergehenden Ansprüche, aufweisend mindestens einen durch die erste oder die zweite Logikschaltung (C1, C2) angesteuerten Leistungsschalter (S1, S2), der entsprechend den ersten bzw. den zweiten Wandler (P1, P2) taktet.

6. Betriebsgerät nach einem der vorhergehenden Ansprüche,
wobei die erste Logikschaltung (C1) dazu ausgebildet ist, über eine Kommunikationseinheit (EKE) die externen Befehle, insbesondere als DALI (Digital Addressable Lighting Interface)-Befehle, oder Statusinformationen zu empfangen, und Statusinformationen insbesondere Fehlerrückmeldungen zu übersenden.

7. Betriebsgerät nach einem der vorhergehenden Ansprüche,
wobei die erste Logikschaltung (C1) den ersten Wandler (P1) derart steuert, dass eine aktive Leistungsfaktorkorrektur mit getaktetem Schalter (S1) bewirkt wird.

8. Betriebsgerät nach einem der vorhergehenden Ansprüche,
wobei primärseitige Betriebsparameter-Signale, die auf dem ersten Bezugspotential (Z1) liegen, der ersten Logikschaltung (C1) zurückgeführt werden.

9. Betriebsgerät nach einem der vorhergehenden Ansprüche,
wobei sekundärseitige Betriebsparameter-Signale, die auf dem zweiten Bezugspotential (Z2) liegen, der zweiten Logikschaltung (C2) zurückgeführt werden.

10. Betriebsgerät nach einem der vorhergehenden Ansprüche,
wobei die zweite Logikschaltung (C2) dazu ausgebildet ist, das Leuchtmittel anzusteuern.

11. Betriebsgerät nach einem der vorhergehenden Ansprüche,
wobei Rückführsignale insbesondere aus dem Bereich des Lastkreises (L) zu der zweiten Logikschaltung (C2) zurückgeführt werden, wobei diese Rückführsignale als Istwerte zur Regelung des Leuchtmittelbetriebs ausgewertet und/oder Fehler des Leuchtmittels erkannt werden.

12. LED Lampe, insbesondere LED Lampe für den Ersatz einer konventionellen Glühlampe,
aufweisend ein Betriebsgerät nach einem der vorhergehenden Ansprüche.

13. Leuchte, insbesondere Notlichtbeleuchtung,
aufweisend ein Betriebsgerät nach einem der vorhergehenden Ansprüche.

## Claims

1. Operating device for operating at least one lighting means, in particular a LED, wherein the operating device has:
- a first converter (P1), supplied with line voltage (Uin), having a first reference potential (Z1), wherein the first converter (P1) has a transformer with a primary winding (n1) and a secondary winding (n2),
- a second converter (P2), galvanically isolated from the primary winding (n1) of the first converter (P1), having a second reference potential (Z2) for supplying a load circuit (L) with the lighting means, wherein the second converter (P2) is configured as switched-mode regulator, and
- a first logic circuit (C1) for controlling the first converter (P1) and a second logic circuit (C2) for controlling the second converter (P2),
**characterized in that**
- the first logic circuit (C1) and the second logic circuit (C2) are connected with each other via a potential-isolated bidirectional interface (J1) for the bidirectional transmission of information between the first logic circuit (C1) and the second logic circuit (C2),
- external commands can be fed to the first logic circuit (C1), wherein the commands are dimming value specifications, and
- the second logic circuit (C2) actuates active elements on the secondary side of the galvanic isolation dependent on the dimming value specifications.

2. Operating device according to claim 1, wherein the potential-isolated interface (J1) is configured as an air-core coil integrated in an IC, as a transformer external to the IC or as piezoelectric transformer.

3. Operating device according to one of the preceding claims, wherein the first logic circuit (C1), the second logic circuit (C2) and the potential-isolated interface (J1) are integrated in an integrated circuit.

4. Operating device according to one of the preceding claims, wherein via the potential-isolated interface (J1) measured data, states and/or control signals are transferred between the two logic circuits (C1, C2).

5. Operating device according to one of the preceding claims, having at least one power switch (S1, S2), actuated by the first or the second logic circuit (C1, C2), that clocks corresponding to the first or second converter (P1, P2).

6. Operating device according to one of the preceding claims, wherein the first logic circuit (C1) is configured to receive, via a communication unit (EKE), the external commands, in particular as DALI (Digital Addressable Lighting Interface) commands, or status information, and to transmit status information, in particular error feedback.

7. Operating device according to one of the preceding claims, wherein the first logic circuit (C1) controls the first converter (P1) in such a way that an active power factor correction is produced with clocked switch (S1).

8. Operating device according to one of the preceding claims, wherein operating parameter signals on the primary side, that are on the first reference potential (Z1), are fed back to the first logic circuit (C1).

9. Operating device according to one of the preceding claims, wherein operating parameter signals on the secondary side, that are on the second reference potential (Z2), are fed back to the second logic circuit (C2).

10. Operating device according to one of the preceding claims, wherein the second logic circuit (C2) is configured to actuate the lighting means.

11. Operating device according to one of the preceding claims, wherein feedback signals, in particular from the area of the load circuit (L), are fed back to the second logic circuit (C2), wherein these feedback signals are evaluated as actual values for regulating the lighting means operation and/or recognized as errors of the lighting means.

12. LED lamp, in particular LED lamp for replacing a conventional light bulb, having an operating device according to one of the preceding claims.

13. Luminaire, in particular emergency lighting, having an operating device according to one of the preceding claims.

## Revendications

1. Dispositif de fonctionnement destiné à faire fonctionner au moins un moyen d'éclairage, en particulier une DEL, dans lequel le dispositif de fonctionnement possède :
- un premier transducteur (P1), alimenté par une tension de secteur (Uin), ayant un premier potentiel de référence (Z1), dans lequel le premier transducteur (P1) possède un transformateur disposant d'un enroulement primaire (n1) et d'un enroulement secondaire (n2),
- un second transducteur (P2), isolé galvaniquement de l'enroulement primaire (n1) du premier transducteur (P1), ayant un second potentiel de référence (Z2) destiné à alimenter un circuit de charge (L) avec le moyen d'éclairage, dans lequel le second transducteur (P2) est configuré comme un régulateur de commutation,
et
- un premier circuit logique (C1) destiné à commander le premier transducteur (P1) et un second circuit logique (C2) destiné à commander le second transducteur (P2).
**caractérisé en ce que**
- le premier circuit logique (C1) et le second circuit logique (C2) sont reliés l'un à l'autre par l'intermédiaire d'une interface bidirectionnelle à séparation de potentiel (J1) destinée à la transmission bidirectionnelle d'informations entre le premier circuit logique (C1) et le second circuit logique (C2),
- des commandes externes pouvant être introduites dans le premier circuit logique (C1), dans lequel les commandes sont des spécifications de valeur de gradation, et
- le second circuit logique (C2) actionne des éléments actifs du côté secondaire de l'isolation galvanique dépendant des spécifications de valeur de gradation.

2. Dispositif de fonctionnement selon la revendication 1, dans lequel l'interface à séparation de potentiel (J1) est configurée comme une bobine à noyau d'air intégrée dans un circuit intégré (CI), comme un transformateur externe au CI ou comme un transformateur piézoélectrique.

3. Dispositif de fonctionnement selon l'une des revendications précédentes, dans lequel le premier circuit logique (C1), le second circuit logique (C2) et l'interface à séparation de potentiel (J1) sont intégrés dans un circuit de commutation intégré.

4. Dispositif de fonctionnement selon l'une des revendications précédentes, dans lequel par l'intermédiaire de l'interface à séparation de potentiel (J1) les données de mesure, états et/ou signaux de commande sont transférés entre les deux circuits logiques (C1, C2).

5. Dispositif de fonctionnement selon l'une des revendications précédentes, disposant au moins d'un interrupteur de puissance (S1, S2), actionné par le premier ou le second circuit logique (C1, C2), qui se synchronise en fonction du premier ou second transducteur (P1, P2).

6. Dispositif de fonctionnement selon l'une des revendications précédentes, dans lequel le premier circuit logique (C1) est configuré pour recevoir, par l'intermédiaire d'une unité de communication (EKE), des commandes externes, en particulier des commandes DALI (Digital Addressable Lighting Interface), ou des informations d'état, et pour transmettre des informations d'état, en particulier des feed-back d'erreurs.

7. Dispositif de fonctionnement selon l'une des revendications précédentes, dans lequel le premier circuit logique (C1) commande le premier transducteur (P1) de telle sorte qu'une correction active du facteur de puissance est réalisée par un commutateur synchronisé (S1).

8. Dispositif de fonctionnement selon l'une des revendications précédentes, dans lequel les signaux des paramètres de fonctionnement du côté primaire, étant sur le premier potentiel de référence (Z1), sont réintroduits dans le premier circuit logique (C1).

9. Dispositif de fonctionnement selon l'une des revendications précédentes, dans lequel les signaux des paramètres de fonctionnement du côté secondaire, étant sur le second potentiel de référence (Z2), sont réintroduits dans le second circuit logique (C2).

10. Dispositif de fonctionnement selon l'une des revendications précédentes, dans lequel le second circuit logique (C2) est configuré pour actionner le moyen d'éclairage.

11. Dispositif de fonctionnement selon l'une des revendications précédentes, dans lequel les signaux de feed-back, en particulier provenant de la zone du circuit de charge (L), sont réintroduits dans le second circuit logique (C2), dans lequel ces signaux de feed-back sont évalués comme des valeurs effectives pour régler le fonctionnement du moyen d'éclairage et/ou reconnus comme des erreurs du moyen d'éclairage.

12. Lampe à DEL, en particulier lampe à DEL servant à remplacer une lampe à incandescence traditionnelle, ayant un dispositif de fonctionnement selon l'une des revendications précédentes.

13. Luminaire, en particulier éclairage de secours, ayant un dispositif de fonctionnement selon l'une des revendications précédentes.
